# FASCICULE DE BREVET EUROPEEN

(11) **EP 2 614 221 B1**
(45) Date de publication et mention de la délivrance du brevet: **15.04.2015**
(21) Numéro de dépôt: 11751613.8
(22) Date de dépôt: 05.09.2011
(51) Int. Cl.: F04D 29/54, F01D 5/32, F01D 5/12, F01D 5/28, F01D 5/14, F01D 5/24, F01D 9/04, F01D 25/24

(54) **AUBE DE TURBOREACTEUR**
SCHAUFEL EINES TURBINENTRIEBWERKS
TURBINE ENGINE BLADE

(30) Priorité: 06.09.2010 FR 1057070
(43) Date de publication de la demande: 17.07.2013
(73) Titulaire: Messier-Bugatti-Dowty, 78140 Vélizy-Villacoublay (FR); Aircelle, 76700 Gonfeville-l'Orcher (FR)
(72) Inventeur: MASSON, Richard, F-78350 Les Loges-en-Josas (FR); DUNLEAVY, Patrick, F-91120 Palaiseau (FR); DESJOYEAUX, Bertrand, F-76310 Sainte-Adresse (FR)
(74) Mandataire: Parzy, Benjamin Alain
(86) Numéro de dépôt international: PCT/EP2011/065338
(87) Numéro de publication internationale: WO 2012/032016

(56) Documents cités:
- EP-A1- 0 604 298
- EP-A2- 1 079 075
- EP-A2- 1 227 218
- EP-A2- 2 105 579
- US-A- 4 395 195
- US-A- 5 403 153
- US-A1- 2009 317 246

## Description

La présente invention concerne une aube de turboréacteur, notamment une aube de redresseur, ainsi qu'un turboréacteur intégrant une telle aube.

### ARRIERE PLAN DE L'INVENTION

On connaît des aubes en matériau composite comportant des extrémités qui portent des moyens de fixation à des carters annulaires d'un turboréacteur.

Différents moyens de fixation ont été proposés. Par exemple, le document US2009/0317246 préconise des extrémités comportant une plateforme cylindrique formant une portion du carter externe et portant deux flancs de fixation, ce qui conduit à des formes complexes à fabriquer. Le document US2009/0317246 préconise la solidarisation des aubes entre elles au moyen d'un anneau circulaire avant de monter l'ensemble ainsi constitué dans le carter. C'est une solution lourde à mettre en oeuvre, nécessitant des outillages d'assemblage.

### OBJET DE L'INVENTION

Le but de l'invention est donc de proposer une aube pour turboréacteur simple à produire et facile à monter.

### BREVE DESCRIPTION DE L'INVENTION

A cet effet, on propose selon l'invention une aube de turboréacteur, notamment une aube de redresseur selon la revendication 1, comprenant les éléments suivants :
- une portion avant monobloc allongée découpée dans un profilé pultrudé comportant des fibres liées par de la résine et formant bord d'attaque ;
- une portion arrière monobloc allongée découpée dans un profilé pultrudé comportant des fibres liées par de la résine et formant bord de fuite ;
- une peau découpée dans un tissu de fibres imprégné de résine s'étendant pour recouvrir des faces latérales de l'âme et recouvrant au moins des zones du bord d'attaque et du bord de fuite contiguës à la portion centrale, l'ensemble de ces éléments étant solidarisé par compaction à chaud pour donner lieu à une aube monobloc particulièrement résistante.

Selon un aspect particulier de l'invention, l'aube comporte une portion centrale formant âme disposée entre le bord d'attaque et le bord de fuite et, de préférence, le bord d'attaque et le bord de fuite présentent des prolongements qui s'étendent en saillie de l'âme au moins d'un côté de l'aube pour former des moyens d'accrochage de l'aube à un carter du turboréacteur.

Le prolongement des bords d'attaque et de fuite permet de former très facilement des ancrages de l'aube dans un carter annulaire. Il suffit de prévoir dans le carter des orifices de passage pour recevoir ces prolongements qui peuvent dés lors être fixés à des moyens d'accrochage complémentaires du carter.

Selon un mode de réalisation préféré, le bord d'attaque et/ou le bord de fuite comprend un corps allongé obtenu par pultrusion et imprégné de résine thermoplastique comportant des fibres essentiellement disposées selon un axe longitudinal du bord d'attaque et de fuite. Si les aubes sont cylindriques, alors le bord d'attaque et/ou le bord de fuite pourra être découpé à longueur dans un barreau réalisé comme indiqué. Une telle réalisation permet l'obtention d'un bord d'attaque et de fuite capable de résister à de fortes contraintes.

L'invention concerne également un turboréacteur spécialement adapté à recevoir de telles aubes, chaque aube étant fixée à au moins un carter de manière à ce que les moyens d'accrochage de l'aube coopèrent avec des moyens d'accrochage complémentaires du carter.

Selon un mode de réalisation préféré, les moyens d'accrochage du carter sont obtenus par pultrusion et imprégnés de résine thermoplastique, l'ensemble étant assemblé par compaction à chaud avec le carter.

### BREVE DESCRIPTION DES DESSINS

D'autres caractéristiques et avantages de l'invention apparaîtront à la lecture de la description qui suit de modes de réalisation particuliers de l'invention en relation avec les figures ci-jointes parmi lesquelles :
- la figure 1 est une vue de dessus d'une aube selon l'invention ;
- la figure 2 est une vue en perspective de l'aube de la figure 1, la peau recouvrant l'âme de l'aube étant partiellement écorchée ;
- la figure 3 est une vue en perspective d'un premier mode de fixation de l'aube à un carter;
- la figure 4 est une vue en perspective d'un deuxième mode de fixation l'aube au carter.

### DESCRIPTION DETAILLEE DE L'INVENTION

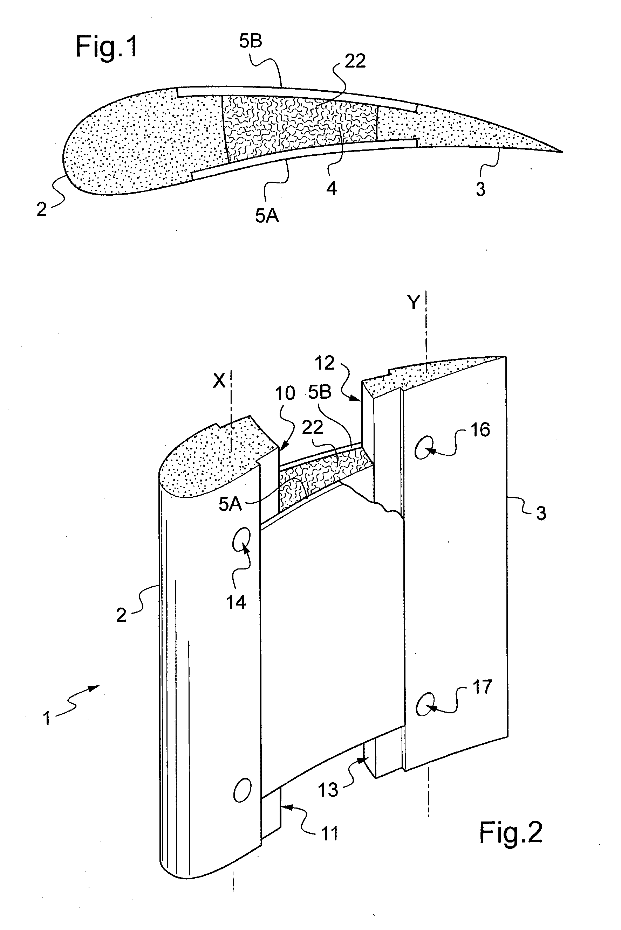

En référence aux figures 1 et 2, l'aube 1 qui est ici illustrée est une aube de redresseur, destinée à s'étendre derrière la soufflante d'un turboréacteur. L'aube 1 comprend un bord d'attaque 2 se présentant ici sous la forme d'une structure allongée monobloc. L'aube 1 comporte par ailleurs un bord de fuite 3 qui se présente également sous la forme d'une structure allongée monobloc.

Le bord d'attaque 2 et le bord de fuite 3 sont découpés dans des profilés obtenus par pultrusion, de préférence avec placement de fibres obliques (procédé dit "pullbraiding"). Les profilés comportent des fibres, par exemple des fibres de carbone, essentiellement disposées selon un axe longitudinal pour former un corps allongé. Idéalement, sensiblement 80% des fibres sont disposées selon l'axe longitudinal du bord d'attaque X et de fuite Y et 20% des fibres sont disposées selon une inclinaison d'environ 60 degrés par rapport à l'axe longitudinal. Ces proportions et l'agencement des fibres sont donnés à titre d'exemple. Les fibres sont ici imprégnées de résine thermoplastique.

Entre le bord d'attaque 2 et le bord de fuite 3 s'étend une âme 4. Une peau 5 comportant ici deux voiles 5A, 5B obtenus par découpe dans un tissu de fibres pré-imprégné de résine thermoplastique, s'étendent de part et d'autre de l'âme 4 pour recouvrir celle-ci ainsi que des zones du bord d'attaque 2 et du bord de fuite 3 contigües à l'âme 4.

Les faces de l'âme 4 non recouvertes par les voiles 5A, 5B formant des extrémités libres de l'âme 4 sont ici protégées et renforcées au moyen d'un mélange 22 de fibres courtes et de résine inséré dans une cavité définie par les voiles 5A, 5B et le bord libre de l'âme 4. Le bord d'attaque 2 et le bord de fuite 3 comportent des prolongements 10, 11, 12, 13 qui s'étendent en saillie de l'âme 4 de chaque côté de l'aube 1.

L'assemblage des différents composants de l'aube 1 entre eux est réalisé par compaction à chaud de manière à solidariser l'ensemble. Ce type d'assemblage confère une grande résistance à l'ensemble de l'aube 1.

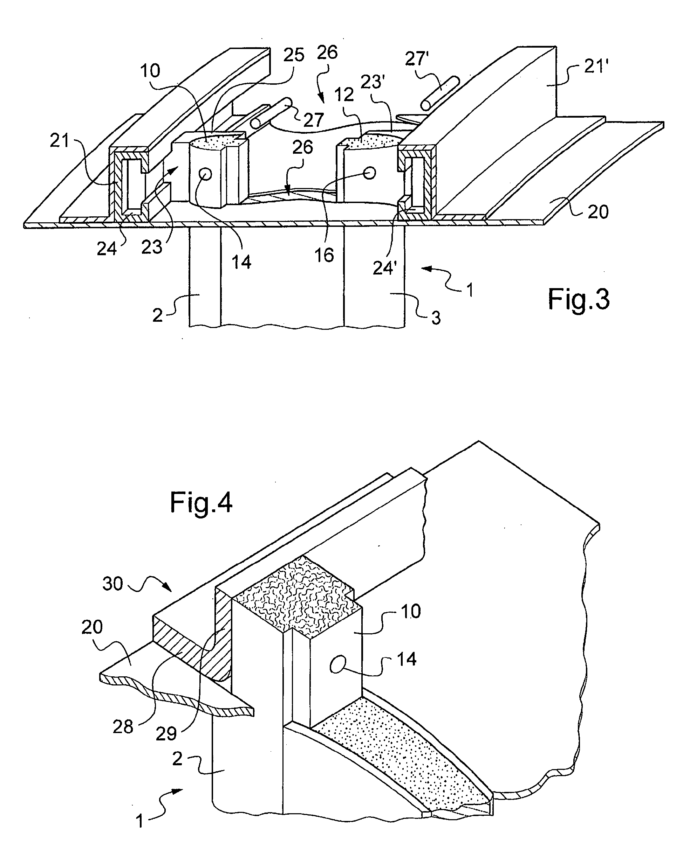

Enfin, on réalise dans les prolongements 10, 11, 12, 13 des orifices 14, 15, 16, 17 de sorte à transformer ces prolongements en moyens d'accrochage de l'aube 1 destinés à coopérer avec des moyens d'accrochage complémentaire d'un carter du turboréacteur, comme cela va maintenant être détaillé en relation avec les figures 3 et 4.

La figure 3 représente un premier mode de fixation de l'aube 1 à un carter annulaire 20 de turboréacteur. (On a représenté ici le carter externe du turboréacteur réalisé en fibres longues imprégnées de résine thermoplastique). Le carter 20 comporte des orifices 26 pour le passage au travers du carter 20 des prolongements 10, 12 du bord d'attaque 2 et du bord de fuite 3. Les orifices 26 sont illustrés comme étant suffisamment étendus pour laisser passer les prolongements des bords d'attaque et de fuite par le même orifice. Cependant, on pourra en variante réaliser les orifices en deux parties, dont un orifice amont et un orifice aval pour laisser passer respectivement les extrémités du bord d'attaque et du bord de fuite.

Le carter 20 est équipé de moyens d'accrochage des bords d'attaque qui comportent un rail 21 périphérique qui s'étend autour du carter, sur une face de celui-ci opposé à l'aube. Le rail 21 définit un logement apte à recevoir les têtes 24 d'éléments de fixation 23 en forme générale de T ou de L. Un de ces éléments est ici illustré.

L'élément de fixation 23 comporte une extrémité opposée 25 opposée à la tête 24 qui est découpée pour accueillir le prolongement 10 du bord d'attaque. La solidarisation entre l'élément de fixation 23 et le prolongement 10 est ici réalisée par brochage. A cet effet, l'extrémité 25 comporte un orifice, non visible ici, situé en regard de l'orifice 14 du prolongement 10 du bord d'attaque 2, pour recevoir une broche de fixation 27.

La fixation du prolongement 12 du bord de fuite 3 est réalisée de manière similaire, au moyen d'un deuxième rail 21', dans lequel un deuxième élément de fixation 23' est engagé pour coopérer avec le prolongement 12 du bord de fuite 3, le tout broché à l'aide d'une broche 27'.

Selon un mode de réalisation préféré, les rails 21, 21' et les éléments de fixation 23, 23' sont réalisés par pultrusion et sont imprégnés de résine thermoplastique permettant ainsi une solidarisation de l'ensemble par une opération unique de compaction à chaud au carter 20.

La figure 3 ne représente, par ailleurs, qu'une moitié de l'aube 1. Ici les portions terminales 11, 13 non visibles sont fixées à un carter interne de façon identique à ce qui vient d'être décrit. Cependant, si l'aube n'a pas de fonction structurale, l'aube peut n'être fixée qu'à un seul des carters.

La figure 4 illustre un deuxième mode de fixation de l'aube 1 à un carter 20 de turboréacteur. Ici, les moyens d'accrochage comportent une cornière 30 périphérique s'étendant autour du carter. La cornière 30 s'étend sur une face opposée du carter 20 par rapport à l'aube 1. Le carter 20 comporte des orifices de passage 26 permettant aux prolongements des bords d'attaque et de fuite de l'aube de traverser le carter 20 pour s'étendre en regard de la cornière 30.

De manière préférentielle, la cornière 30 est réalisée par pultrusion et est imprégnée de résine thermoplastique.

La cornière 30 présente une section en L dont une première face 28 est ici fixée au carter 20 par compaction à chaud et une deuxième face 29 est fixée au prolongement 10 par brochage. A cet effet, la face 29 de la cornière 30 est percée d'un orifice venant en regard de l'orifice 114 pratiqué dans le prolongement 10 du bord d'attaque. On remarquera d'ailleurs que l'orifice 114 est percé perpendiculairement à l'orifice 14 du mode de réalisation précédent. On remarquera également que le prolongement 10 a été usiné pour présenter une face dressée venant en appui contre la face en regard de l'aile 29.

Comme dans l'exemple précédent, les différents éléments du carter sont solidarisés entre eux par thermocompaction.

Par ailleurs, les prolongements 11, 12, 13 du bord d'attaque 2 et du bord de fuite 3, non représentés, sont fixés de façon identique à une cornière similaire.

L'opération de fixation de l'aube 1 à la cornière 30 est répétée autant de fois que d'aubes sont à disposer.

Outre leur rôle pour la fixation des aubes par leur prolongement de bord d'attaque ou de bord de fuite, on remarquera que les rails et cornières contribuent également à rigidifier le carter du turboréacteur.

Bien entendu, l'invention n'est pas limitée aux modes de réalisation décrits ci-dessus et sont susceptibles de variantes qui apparaîtront à l'homme de métier sans sortir du cadre de l'invention tel que défini par les revendications.

Notamment, les matériaux utilisés pour la réalisation des différents éléments 2, 3, 4, 5 de l'aube 1 et des moyens d'accrochage 21, 23, 27 peuvent aussi bien être des matériaux composites que des matériaux métalliques ou d'une combinaison des deux.

De même, les renforts 22, visibles à la figure 2, venant coiffer les extrémités libres de l'âme 4 peuvent être remplacés ou complétés par un rabattement de la peau d'un ou des voiles 5A, 5B. Dans ce cas, la dimension des voiles 5A, 5B sera ajustée pour prévoir un rabat venant recouvrir l'extrémité libre de l'âme.

De même, les moyens d'accrochage du carter et ceux du bord d'attaque et de fuite peuvent être solidarisés entre eux par des opérations de compaction à chaud, de soudage, de collage ou encore utilisant des couples vis/écrou ou toute autre solution assurant le maintien de ces éléments entre eux.

Enfin, bien que les figures 3 et 4 suggèrent des moyens de fixation identiques à chacun des prolongements 10, 11, 12, 13 du bord d'attaque 2 et du bord de fuite 3 selon deux modes de réalisation différents, il n'est pas contraire à l'invention que chaque prolongement soit fixé au carter 20 selon l'un ou l'autre des moyens de fixation de manière indépendante.

L'âme peut être partiellement ou totalement renforcée de fibres courtes.

L'âme peut être agencée pour remplir totalement ou seulement partiellement le volume compris entre le bord d'attaque et le bord de fuite. La portion centrale peut ainsi avoir la forme d'une ou plusieurs nervures formant âme. Dans un mode particulier de réalisation, l'aube peut ne pas comporter d'âme centrale, les portions formant bords d'attaque et de fuite étant alors contigües.

L'aube peut comprendre une âme présentant une faible résistance mécanique ou peut être dépourvue d'âme : la liaison mécanique des bords d'attaque et de fuite est assurée par la peau et/ou par les renforts, l'âme et les renforts étant de préférence formés d'une seule pièce de résine plastique incorporant des fibres courtes.

## Revendications

1. Aube de turboréacteur, notamment une aube de redresseur, **caractérisé en ce que** l'aube comprend les éléments suivants :
- une portion avant (2) monobloc allongée découpée dans un profilé pultrudé comportant des fibres liées par de la résine et formant bord d'attaque ;
- une portion arrière (3) monobloc allongée découpée dans un profilé pultrudé comportant des fibres liées par de la résine et formant bord de fuite ;
- une peau (5) à base de fibres imprégnées de résine s'étendant entre le bord d'attaque et le bord de fuite pour former des faces latérales de l'aube et recouvrant au moins des zones (6, 7) du bord d'attaque (2) et du bord de fuite (3) ;
l'ensemble des éléments étant assemblé par compaction à chaud.

2. Aube de turboréacteur selon la revendication 1, dans laquelle la résine imprégnant la peau (5) est une résine thermoplastique.

3. Aube de turboréacteur selon la revendication 1, dans laquelle la résine imprégnant le bord d'attaque et/ou le bord de fuite est une résine thermoplastique.

4. Aube de turboréacteur selon la revendication 1, dans laquelle le bord d'attaque et/ou le bord de fuite sont obtenus par pultrusion avec placement de fibres obliques.

5. Aube de turboréacteur selon la revendication 1, dans laquelle le bord d'attaque (2) et le bord de fuite (3) sont reliés l'un à l'autre par des renforts (22) s'étendant au voisinage d'extrémités desdits bords.

6. Aube de turboréacteur selon la revendication 1 ou 2, comportant une portion centrale (4) formant âme disposée entre le bord d'attaque (2) et le bord de fuite (3).

7. Aube de turboréacteur selon la revendication 6 dans laquelle l'âme (4) a des extrémités libres qui sont renforcées par insertion de fibres courtes et de résine thermoplastique (22) dans une cavité formée par la peau et l'âme (4).

8. Aube de turboréacteur selon la revendication 6, dans laquelle l'âme (4) a des extrémités libres qui sont renforcées par rabattement d'une portion de la peau (5A, 5B) sur lesdites extrémités.

9. Aube de turboréacteur selon la revendication 6, dans laquelle le bord d'attaque (2) et le bord de fuite (3) présentent des prolongements (10, 11, 12, 13) qui s'étendent en saillie de l'âme (4) au moins d'un côté de l'aube (1), pour porter des moyens d'accrochage (14, 15, 16, 17) de l'aube (1) à un carter (20) du turboréacteur.

10. Aube de turboréacteur selon la revendication 9, dans laquelle les moyens d'accrochage (14, 15, 16, 17) de l'aube à un carter sont réalisés directement dans les prolongements (10, 11, 12, 13).

11. Aube de turboréacteur selon la revendication 6, dans laquelle le bord d'attaque (2) et le bord de fuite (3) sont reliés l'un à l'autre par des renforts (22) s'étendant au voisinage d'extrémités desdits bords, l'âme (4) et les renforts étant formés d'une seule pièce de résine plastique, incorporant des fibres courtes.

12. Turboréacteur comprenant une pluralité d'aubes selon l'une des revendications précédentes, dans lequel chaque aube est fixée à au moins un carter de manière à ce que les moyens d'accrochage de l'aube (14, 15, 16, 17) coopèrent avec des moyens d'accrochage complémentaire du carter (21, 30).

13. Turboréacteur selon la revendication 12, dans lequel les moyens d'accrochage (21) du carter comportent au moins un rail (21) périphérique dans lequel sont insérées des extrémités (24) d'éléments de fixation (23), les éléments de fixation ayant des extrémités opposées sur lesquelles sont fixés les moyens d'accrochage (14, 15, 16, 17) portés par les bords d'attaque (2) ou des bords de fuite (3) de l'aube (1).

14. Turboréacteur selon la revendication 12, dans lequel les moyens d'accrochage (30) du carter comportent une cornière (30) périphérique sur laquelle sont directement fixés les prolongements les bords de d'attaque (2) ou les bords de fuite (3).

15. Turboréacteur selon la revendication 12, dans lequel les moyens d'accrochage (21, 30) du carter sont obtenus par pultrusion et imprégnés de résine thermoplastique, et sont assemblés par compaction à chaud avec le carter.

## Patentansprüche

1. Schaufel eines Turbinentriebwerks, insbesondere eine Leitschaufel,
**dadurch gekennzeichnet**, das die Schaufel die folgenden Elemente umfasst:
- einen länglichen, einstückigen vorderen Abschnitt (2), der aus einem pultrudierten Profil ausgeschnitten ist, das durch Harz miteinander verbundene Fasern umfasst, und der eine Eintrittskante bildet,
- einen länglichen, einstückigen hinteren Abschnitt (3), der aus einem pultrudierten Profil ausgeschnitten ist, das durch Harz miteinander verbundene Fasern umfasst, und der eine Austrittskante bildet,
- eine Haut (5) auf Basis von mit Harz imprägnierten Fasern, die sich zwischen der Eintrittskante und der Austrittskante erstreckt, um seitliche Flächen der Schaufel zu bilden, und zumindest Bereiche (6, 7) der Eintrittskante (2) und der Austrittskante (3) abdeckt,
wobei die Gesamtheit der Elemente durch Warmverdichtung zusammengefügt ist.

2. Schaufel eines Turbinentriebwerks nach Anspruch 1, wobei das die Haut (5) imprägnierende Harz ein thermoplastisches Harz ist.

3. Schaufel eines Turbinentriebwerks nach Anspruch 1, wobei das die Eintrittskante und/oder die Austrittskante imprägnierende Harz ein thermoplastisches Harz ist.

4. Schaufel eines Turbinentriebwerks nach Anspruch 1, wobei die Eintrittskante und/oder die Austrittskante durch Pultrudieren mit Anordnung von schrägen Fasern erhalten werden.

5. Schaufel eines Turbinentriebwerks nach Anspruch 1, wobei die Eintrittskante (2) und die Austrittskante (3) miteinander durch Verstärkungen (22) verbunden sind, die sich nahe den Enden der genannten Kanten erstrecken.

6. Schaufel eines Turbinentriebwerks nach Anspruch 1 oder 2, umfassend einen zentralen Abschnitt (4), der einen Kern bildet, der zwischen der Eintrittskante (2) und der Austrittskante (3) angeordnet ist.

7. Schaufel eines Turbinentriebwerks nach Anspruch 6, wobei der Kern (4) freie Enden hat, die durch Einfügen von kurzen Fasern und thermoplastischem Harz (22) in einen durch die Haut und den Kern (4) gebildeten Hohlraum verstärkt sind.

8. Schaufel eines Turbinentriebwerks nach Anspruch 6, wobei der Kern (4) freie Enden hat, die durch Umschlagen eines Abschnittes der Haut (5A, 5B) auf die genannten Enden verstärkt sind.

9. Schaufel eines Turbinentriebwerks nach Anspruch 6, wobei die Eintrittskante (2) und die Austrittskante (3) Verlängerungen (10, 11, 12, 13) aufweisen, die von dem Kern (4) mindestens auf einer Seite der Schaufel (1) vorstehen, um Verbindungsmittel (14, 15, 16, 17) zum Verbinden der Schaufel (1) mit einem Gehäuse (20) des Turbinentriebwerks zu tragen.

10. Schaufel eines Turbinentriebwerks nach Anspruch 9, wobei die Verbindungsmittel (14, 15, 16, 17) zum Verbinden der Schaufel mit einem Gehäuse direkt in den Verlängerungen (10, 11, 12, 13) ausgebildet sind.

11. Schaufel eines Turbinentriebwerks nach Anspruch 6, wobei die Eintrittskante (2) und die Austrittskante (3) miteinander durch Verstärkungen (22) verbunden sind, die sich nahe den Enden der genannten Kanten erstrecken, wobei der Kern (4) und die Verstärkungen aus einem einzigen Stück aus kurze Fasern enthaltenden Kunststoffharz gebildet sind.

12. Turbinentriebwerk, umfassend eine Vielzahl von Schaufeln nach einem der vorhergehenden Ansprüche, wobei jede Schaufel an mindestens einem Gehäuse derart befestigt ist, dass die Verbindungsmittel (14, 15, 16, 17) zum Verbinden der Schaufel mit komplementären Verbindungsmitteln des Gehäuses (21, 30) zusammenwirken.

13. Turbinentriebwerk nach Anspruch 12, wobei die Verbindungsmittel (21) des Gehäuses mindestens eine umlaufende Schiene (21) umfassen, in die Enden (24) von Befestigungselementen (23) eingefügt sind, wobei die Befestigungselemente entgegengesetzte Enden haben, an denen die Verbindungsmittel (14, 15, 16, 17), die von den Eintrittskanten (2) oder von Austrittskanten (3) der Schaufel getragen werden, befestigt sind.

14. Turbinentriebwerk nach Anspruch 12, wobei die Verbindungsmittel (30) des Gehäuses ein umlaufende Winkeleisen (30) umfassen, an dem die Verlängerungen der Eintrittskanten (2) oder der Austrittskanten (3) direkt befestigt sind.

15. Turbinentriebwerk nach Anspruch 12, wobei die Verbindungsmittel (21, 30) des Gehäuses durch Pultrudieren erhalten werden und mit thermoplastischem Harz imprägniert sind und durch Warmverdichtung mit dem Gehäuse zusammengefügt werden.

## Claims

1. A turbojet vane, in particular a compressor guide vane, **characterized in that** the vane comprises the following elements:
· an elongate one-piece front portion (2) cut from a pultruded section member comprising fibers bonded together by resin and forming a leading edge;
· an elongate one-piece rear portion (3) cut from a pultruded section member comprising fibers bonded together by resin and forming a trailing edge; and
· a skin (5) based on resin-impregnated fibers extending between the leading edge and the trailing edge in order to form side faces of the vane and covering at least zones (6, 7) of the leading edge (2) and of the trailing edge (3);
these elements being assembled together by hot compaction.

2. A turbojet vane according to claim 1, wherein the resin impregnating the skin (5) is a thermoplastic resin.

3. A turbojet vane according to claim 1, wherein the resin impregnating the leading edge and/or the trailing edge is a thermoplastic resin.

4. A turbojet vane according to claim 1, wherein the leading edge and/or the trailing edge is/are obtained by pultrusion with fibers being placed obliquely.

5. A turbojet vane according to claim 1, wherein the leading edge (2) and the trailing edge (3) are connected to each other by reinforcements (22) extending in the vicinity of the ends of said edges.

6. A turbojet vane according to claim 1 or claim 2, including a core-forming central portion (4) arranged between the leading edge (2) and the trailing edge (3).

7. A turbojet vane according to claim 6, wherein the core (4) has free ends that are reinforced by inserting short fibers and thermoplastic resin (22) in a cavity formed by the skin and the core (4).

8. A turbojet vane according to claim 6, wherein the core (4) has free ends that are reinforced by folding over portions of the skin (5A, 5B) on said ends.

9. A turbojet vane according to claim 6, wherein the leading edge (2) and the trailing edge (3) present extensions (10, 11, 12, 13) that project from the core (4) from at least one end of the vane (1) in order to carry attachment means (14, 15, 16, 17) for attaching the vane (1) to a casing (20) of the turbojet.

10. A turbojet vane according to claim 9, wherein the attachment means (14, 15, 16, 17) for attaching the vane to a casing are made directly in the extensions (10, 11, 12, 13).

11. A turbojet vane according to claim 6, wherein the leading edge (2) and the trailing edge (3) are connected together by reinforcements (22) extending in the vicinity of the ends of said edges, the core (4) and the reinforcements being made as a single piece of plastics resin, incorporating short fibers.

12. A turbojet including a plurality of vanes according to any preceding claim, wherein each vane is fastened to at least one casing in such a manner that the attachment means of the vane (14, 15, 16, 17) co-operate with complementary attachment means (21, 30) of the casing.

13. A turbojet according to claim 12, wherein the attachment means (21) of the casing comprise at least one peripheral rail (21) having the ends (24) of fastener elements (23) inserted therein, the fastener elements having opposite ends fastened to the attachment means (14, 15, 16, 17) carried by the leading or trailing edges (2, 3) of the vane (1).

14. A turbojet according to claim 12, wherein the attachment means (30) of the casing comprise a peripheral angle bar (30) having the extensions of the leading or trailing edges (2, 3) fastened directly thereto.

15. A turbojet according to claim 12, wherein the attachment means (21, 30) of the casing are obtained by pultrusion and impregnated with thermoplastic resin, and are assembled to the casing by hot compaction.
